# EUROPÄISCHE PATENTSCHRIFT

(11) **EP 0 624 769 B1**
(45) Veröffentlichungstag und Bekanntmachung des Hinweises auf die Patenterteilung: **10.07.1996**
(21) Anmeldenummer: 94250122.2
(22) Anmeldetag: 11.05.1994
(51) Int. Cl.: F27B 3/19, F27D 3/15, C21C 5/46

(54) **Verfahren und Vorrichtung zum Verschliessen des Bodenabstichs eines metallurgischen Gefässes**
Process and installation for closing the bottom taphole of a metallurgical vessel
Procédé et dispositif pour fermer le trou de coulée dans le fond d'un récipient métallurgique

(30) Priorität: 13.05.1993 DE 4316669
(43) Veröffentlichungstag der Anmeldung: 17.11.1994
(73) Patentinhaber: MANNESMANN Aktiengesellschaft, D-40213 Düsseldorf (DE)
(72) Erfinder: Meierling, Peter, Dr. Dipl.-Ing., D-40489 Düsseldorf (DE)
(74) Vertreter: Presting, Hans-Joachim, Dipl.-Ing.

(56) Entgegenhaltungen:
- EP-A- 0 046 473
- DE-A- 3 437 828
- DE-C- 3 230 646
- US-A- 4 116 421

## Beschreibung

Die Erfindung betrifft ein Verfahren zum Verschließen des Bodenabstichs eines metallurgischen Gefäßes nach den Merkmalen des Anspruchs 1 und eine Vorrichtung entsprechend der Merkmale des Anspruchs 4.

Aus der EP-A-00 46 473 ist es bekannt, das Abstichloch eines Elektroofens mittels einer fließfähigen Masse, die mit Bindemitteln vermischt ist, zu verschließen. Dabei wird die fließfähige Masse entgegen der Strömungsrichtung des Metalls in das Abstichloch eingebracht.

Aus dem deutschen Gebrauchsmuster 84 22 585.8 ist es bekannt, die im Boden eines Schmelzofens bzw. einer Gießpfanne angeordnete Abstichöffnung mittels einer Platte zu verschließen und mit einem losen, trockenen, feuerfesten Granulat zu füllen. Dieses Granulat wird dabei mittels eines Trichters von oben indie Abstichöffnung eingebracht.

Bei diesem Verfahren ist es als nachteilig anzusehen, daß das Abstichloch frei von Schmelz sein muß und das Granulat von oben durch den Gefäßinnenraum zu transportieren ist. Hierzu sind Öffnungen in dem üblicherweise geschlossenen Gefäß vorzusehen, wobei darüber hinaus ein Zielen auf die Abstichöffnung erforderlich ist, um ein sicheres Einfüllen des Granulats zu gewährleisten.

Aus der Schrift DE-PS 32 30 646 ist es bekannt, in das Abstichloch eines feststehenden, nicht kippbaren Elektrometallschmelzofens wärmebeständige Massen einzubringen, die die Schmelze nach oben verdrängen und das Abstichloch füllen. Hierzu wird eine Verschlußeinrichtung so unter das Abstichloch geschoben, daß ein Kanal mit dem Abstichloch fluchtet, um dann zwei verschiedene Massen, nämlich Stopfmasse und rieselfähiges Feuerfestmaterial in das Abstichloch zu pressen.

Bei diesem Verfahren ist es als nachteilig anzusehen, daß es nur bei einem feststehenden Ofen verwandt werden kann und daß eine gesonderte Schieberzunge zum abschließenden Absperren der Mündung des Abstichloches erforderlich ist.

Die Erfindung hat sich zum Ziel gesetzt, eine verschleißarme, wartungsfreundliche Vorrichtung zum Verschließen des Bodenabstichs eines metallurgischen Gefäßes zu schaffen, die mit konstruktiv einfachen, leicht austauschbaren Bauteilen ein sicheres Verschließen und öffnen der Abstichöffnung ermöglicht.

Die Erfindung erreicht dieses Ziel durch die kennzeichnenden Merkmale der Ansprüche 1 und 4.

Hierbei wird über eine außerhalb des Ofens angebrachte Druckfördereinrichtung schüttfähiges Feuerfestmaterial in das Abstichloch entgegen der Ausströmrichtung des flüssigen Materials eingebracht. Bei diesem fließfähigen Material handelt es sich insbesondere um Sand, der mit einem Bindemittel vermischt ist. Diese Mischung läßt sieh zum einen gut transportieren und ist so weit temperaturfest, daß sie bei dem Kontakt mit dem Flüssigmetall weder verbrennt noch vercrackt. Als Bindemittel wird dabei Material eingesetzt, z.B. Glucol, das bei etwa 200^{o} in die gasförmige Phase übergeht.

Beim Kontakt des Fließmaterials mit dem flüssigen Metall wird sich Gas entwickeln, das erfindungsgemäß im Bereich der Abstichöffnung abgesaugt wird. Hierdurch wird vermieden, daß die Restmetallschmelze durch auf steigende Gasblasen aufsprudelt.

Zum Einsatz kommt hier ein Bodenstein, der entweder aus permeablem Material aufgebaut ist oder kapillarförmige Kanäle besitzt, die an eine Absaugeinrichtung angeschlossen sind.

Die Verschließvorrichtung für den Bodenabstich ist so ausgebildet, daß während der Abstichphase der Abstichbereich behinderungsfrei ist und nur beim Verschließen des Abstichloches eine Fördereinrichtung zum Abstichloch geführt wird.

Diese Fördereinrichtung ist an einen plattenförmigen Schieber angeschlossen, der zwei Öffnungen besitzt, und zwar eine für den freien Abstich und eine zum Einbringen von Verschließmaterial. Zur wartungsgerechten Schonung der Fördereinrichtung und zur thermisch angemessenen Beeinflussung des Fördermaterials wird die Fördereinrichtung während des Abstichs vom Abstichloch ferngehalten.

In einer Ausgestaltungsform ist die Fördereinrichtung parallel zum Ofengefäß schwenkbar, in einer anderen wird sie in einem rechten Winkel zur Hauptachse herangeführt und in der letzten Phase parallel zur zweiten Öffnung der Platte geführt. In beiden Fällen sind einfache Koppelelemente sowohl an der Platte wie auch an der Fördereinrichtung vorgesehen, die ein einfaches Koppeln der Fördereinrichtung mit der Platte ermöglichen und ein sicheres Zuführen des Materials zulassen.

Zur Minderung der Strahlung im Bereich des Abstiches ist ein an der Platte zu befestigendes Schutzrohr vorgesehen.

In einer vorteilhaften Ausgestaltung der Platte wird diese aus mehreren scheibenförmigen Elementen zusammengefügt. Auf diese Weise werden zum einen thermische Spannungen innerhalb der Platte stark vermindert. Darüber hinaus wird insbesondere bei einer rechtwinklig ausgeführten Bohrung für die Materialzufuhr ein leichter Austausch von Verschleißelementen ermöglicht. Bei dieser Ausgestaltungsform läßt sich die Fördereinrichtung in einfacher Weise durch parallel zum Ofenboden durchgeführtes Verschieben mit der Platte koppeln.

Ein Beispiel der Erfindung ist in der beigefügten Zeichnung dargelegt. Dabei zeigen die
Figur 1 eine Verschlußplatte mit vertikaler Materialzufuhr
Figur 2 eine Verschlußplatte mit 90^{o} Krümmung.

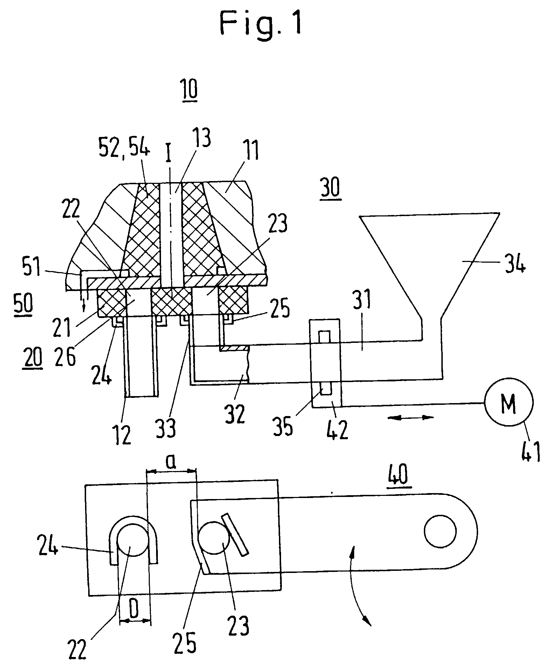

In der Figur 1 ist nur ein Ausschnitt eines Gefäßbodens 11 eines Gefäßes 10 mit einem Abstich 13 dargestellt.
An der Außenseite des Gefäßbodens 11 ist eine Verschließeinrichtung 20 angeordnet, die aus einer Platte 21 besteht, welche eine Mündung 22 für den Abstich und eine Mündung 23 für den Anschluß einer Fördereinrichtung aufweist. An der von dem Gefäßboden 11 abgewandten Seite der Platte 21 sind Elemente 24 am Ausgang einer Bohrung 26, die mit der Mündung 22 in Verbindung steht, sowie Elemente 25, die mit einer Öffnung 27, welche mit der Fördereinrichtungsmündung 23 in Verbindung steht, angeordnet.

An die Elemente 24 ist ein Schutzrohr lösbar befestigt. Die Elemente 25 sind mit einer Rohrverbindung 31 einer Fördereinrichtung 30 kuppelbar. In der vorliegenden Figur ist in der Rohrverbindung 31 eine Förderrichtung 32 vorgesehen, die Material von einem Vorratsbehälter 34 zu einem Austrag 33 fördern.

An der Rohrverbindung 31 sind Kuppelelemente 35 vorgesehen, die mit Greifelementen 42 einer Antriebseinheit 40 korrespondieren. Die Antriebseinheit 40 weist einen Motor auf, mit dem die Rohrverbindung 31 zur Platte hin- bzw. wegbewegbar ist.

Die Abstichöffnung 13 im Gefäßboden 11 wird durch einen hohlen Bodenstein 54 gebildet, der gasdurchlässig ausgestaltet ist, und zwar als aus permeablem Material aufgebauten Bodenstein 52 oder als Bodenstein 53, in den Kanäle eingearbeitet sind. Die Bodensteine 52 oder 53 sind dabei über einen Absaugkanal 51 an eine nicht weiter dargestellte Pumpe angeschlossen.

Die Mündungen 22 und 23 der Platte 21 besitzen einen Durchmesser D und sind über einen Abstand a voneinander beabstandet, wobei a größer ist als D.
Die Platte 21 ist dabei über eine nicht weiter dargestellte Antriebseinheit verschiebbar oder, wie in der Skizze dargestellt, nach Ankuppeln an die Rohrverbindung 31 über die Kuppelelemente 31 bzw. die Greifelemente 42 durch den Motor 21 verschiebbar.

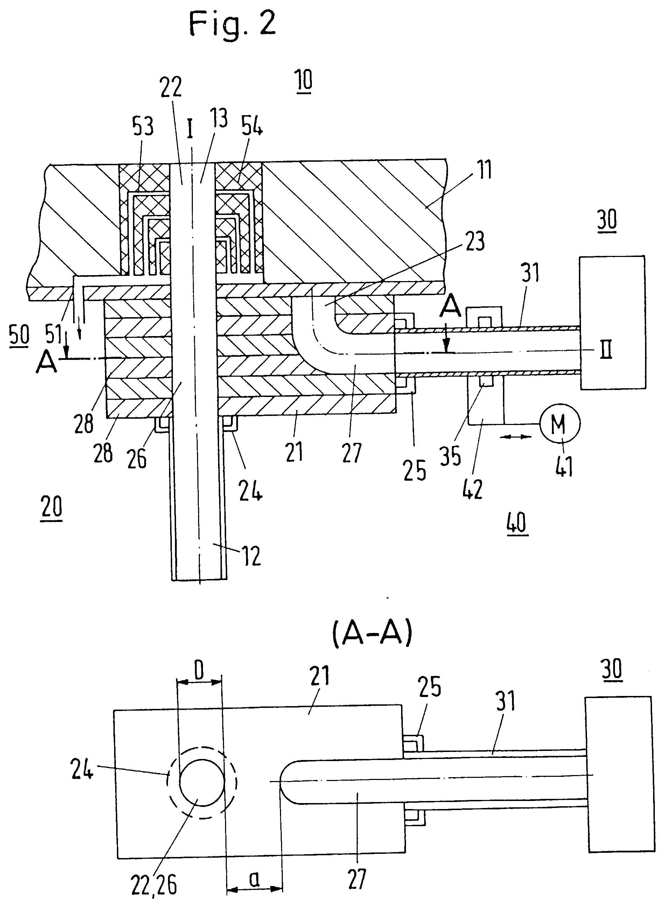

Die Figur 2 zeigt eine Verschließeinrichtung in wesentlichen Positionsziffern wie in der Figur 1. Der dargestellte, die Abstichöffnung 13 besitzende Bodenstein 54 weist Kanäle 53, die an den Absaugkanal 51 der Absaugeinrichtung 50 angeschlossen sind. Die dargestellte Platte 21 ist aus Scheiben 28 zusammengesetzt. Die mit der Mündung 23 in Verbindung stehende Öffnung 27 ist als 90^{o} -Krümmung. Die Fördereinrichtung 30 ist durch einfaches axiales Verfahren in der senkrecht zur Hauptabstichachse I angeordneten Rohrachse II verfahrbar.

### Positionsliste

- 10: Gefäß
- 11: Gefäßboden
- 12: Schutzrohr
- 13: Abstichöffnung
- 20: Verschließeinrichtung
- 21: Platte
- 22: Mündung Abstich
- 23: Mündung Fördereinrichtung
- 24: Elemente Abstich
- 25: Elemente Fördereinrichtung
- 26: Bohrung
- 27: Öffnung
- 28: Scheiben
- 30: Fördereinrichtung
- 31: Rohrverbindung
- 32: Förderschnecke
- 33: Austrag
- 34: Vorratsbehälter
- 35: Kuppelelemente
- 40: Antriebseinheit
- 41: Motor
- 42: Greifelemente
- 50: Absaugeinrichtung
- 51: Absaugkanal
- 52: Bodenstein permeabel
- 53: Bodensteinkanäle
- 54: hohler Bodenstein
- a: Abstand
- D: Durchmesser
- I: Hauptabstichachse
- II: Rohrachse

## Patentansprüche

1. Verfahren zum Verschließen des mit einer Verschlußeinrichtung versehenen Bodenabstichs eines metallurgischen Gefäßes, wobei vor Beendigung des Abgießens der Metallschmelze entgegen der Strömungsrichtung des Metallstromes ein mit einem Bindemittel vermischtes fließfähiges Material in die Bodenabstichöffnung eingebracht wird,
dadurch gekennzeichnet,
daß
a) die bei der Reaktion der Metallschmelze und dem Gemisch aus fließfähigem Material und Bindemittel sich entwickelnden Gase überwiegend durch die Verschlußeinrichtung und/oder die Fließmaterialzuführeinrichtung abgeführt werden, und
b) das Bindemittel rückstandslos verbrennt, das Restmaterial in rieselfähiger Form die Abstichöffnung verstopft und durch eine mechanische Absperrvorrichtung bis zum nächsten Abstich vor dem Herausrieseln gehindert wird.

2. Verfahren nach Anspruch 1,
dadurch gekennzeichnet,
daß das fließfähige Material Sand ist, der mit einem bei einer Temperatur von über 200° verbrennbarem Bindemittel, beispielsweise Glucol vermischt ist.

3. Verfahren nach Anspruch 1,
dadurch gekennzeichnet,
daß die Verbrennungsgase des Bindemittels abgesaugt werden.

4. Bodenabstich eines metallurgischen Gefäßes mit einer Vorrichtung zum Verschließen der Abstichsöffnung, in der sich noch ein Teil einer Metallschmelze befindet, mit einer Platte, die über eine Rohrverbindung an eine Fördereinrichtung angeschlossen ist, durch die fließfähiges Material in das Abstichloch einbringbar ist, zur Durchführung des Verfahrens nach Anspruch 1,
dadurch gekennzeichnet,
daß die Platte zwei Mündungen (22, 23) aufweist, die bei zum Gefäßboden (11) paralleler Führung der Platte (21) koaxial zur Abstichhauptachse (I) bringbar sind,
daß der Abstand (a) beider Mündungen (22, 23) größer als ihr größter Durchmesser (D) ist,
daß die Platte (21) Elemente (25) aufweist, an die die Rohrverbindung (31) befestigbar ist, und
daß die Abstichöffnung (13) aus einem hohlen Bodenstein (54) gebildet wird, der Elemente (52, 53) zum Durchströmen von gasförmigen Medien aufweist, an die eine Absaugeinrichtung (50) angeschlossen ist.

5. Vorrichtung nach Anspruch 4,
dadurch gekennzeichnet,
daß die Elemente (25) eine einander angepaßte Form aufweisen, die ein formschlüssiges Verbinden der Platte (21) mit der Rohrverbindung (31) ermöglicht.

6. Vorrichtung nach Anspruch 4,
dadurch gekennzeichnet,
daß die Rohrverbindung (31) der Austrag (33) einer Förderschnecke (32) ist.

7. Vorrichtung nach Anspruch 6,
dadurch gekennzeichnet,
daß die Förderschnecke (32) mit mindestens einem außerhalb des Gefäßes (10) angeordneten Vorratsbehälter (34) in Verbindung steht.

8. Vorrichtung nach Anspruch 7,
dadurch gekennzeichnet,
daß die aus Vorratsbehälter (34), Förderschnecke (32) und Rohrstutzen (33) bestehende Materialzuführeinheit in einer Ebene senkrecht zur Abstichhauptachse (I) schwenkbar ist.

9. Vorrichtung nach Anspruch 8,
dadurch gekennzeichnet,
daß die Materialzufuhreinheit (32 bis 34) in Schieberfahrrichtung bewegbar ist.

10. Vorrichtung nach Anspruch 9,
dadurch gekennzeichnet,
daß die Materialzufuhreinheit (32 bis 34) Kuppelelemente (35) aufweist, an die mit Greifelementen (42) eine Antriebseinheit zum Verschieben der Verschließeinrichtung (20) anschließbar ist.

11. Vorrichtung nach Anspruch 4,
dadurch gekennzeichnet,
daß an die zum Ausströmen der Schmelze vorgesehenen Mündung (22) der Platte (21) eine senkrecht zur Platte (21) in Gießstrahlrichtung angeordnete Bohrung (26) vorgesehen ist.

12. Vorrichtung nach Anspruch 11,
dadurch gekennzeichnet,
daß an der dem Gefäß (10) abgewandten Seite der Platte (21) koaxial zur Achse der Bohrung (26) über Elemente (24) ein Schutzrohr (12) lösbar befestigt ist.

13. Vorrichtung nach Anspruch 11,
dadurch gekennzeichnet,
daß die parallel zur für das Ausströmen der Schmelze vorgesehene Mündung (22) vorgesehene Mündung (23) über eine Öffnung (27) in der Platte (21) an die Rohrverbindung (31) anschließbar ist, die innerhalb der Platte (21) eine 90 Grad-Umlenkung aufweist.

14. Vorrichtung nach Anspruch 13,
dadurch gekennzeichnet,
daß die Platte (21) aus parallel zueinander und senkrecht zur Abstichhauptachse (I) angeordnete Scheiben (28) aufweist.

## Claims

1. A method for closing the base tap of a metallurgical vessel, which base tap is provided with a closure arrangement, in which before completion of the pouring of the metal melt contrary to the direction of flow of the stream of metal a flowable material, mixed with a binding agent, is introduced into the base taphole,
characterised in that
a) the gases developing during the reaction of the metal melt and the mixture of flowable material and binding agent are predominantly carried off through the closure arrangement and/or the arrangement for the supply of flowing material, and
b) the binding agent burns without a residue, the remaining material in fluid form blocks the taphole and is prevented from trickling out by means of a mechanical shut-off device, until the next tapping.

2. A method according to Claim 1,
characterised in that
the flowable material is sand which is mixed with a binding agent combustible at a temperature of over 200°, for example glucol.

3. A method according to Claim 1,
characterised in that
the combustion gases of the binding agent are sucked out.

4. A base tap of a metallurgical vessel with a device for closing the taphole, in which in addition a portion of a metal melt is situated, with a plate which is connected via a pipe connection to a conveying arrangement through which flowable material is able to be introduced into the taphole, to carry out the method according to Claim 1,
characterised in that
the plate has two orifices (22, 23) which, with the plate (21) being guided parallel to the vessel base (11), are able to be brought coaxially to the main tap axis (I),
the spacing (a) of the two orifices (22, 23) is greater than their greatest diameter (D),
the plate (21) has elements (25) on which the pipe connection (31) is able to be fastened, and
the taphole (13) is formed from a hollow bedstone (54) which has elements (52, 53) for gaseous media to flow through, to which elements (52, 53) a suction arrangement (50) is connected.

5. A device according to Claim 4,
characterised in that
the elements (25) have a shape matching each other, which makes possible a form-fitting connection of the plate (21) with the pipe connection (31).

6. A device according to Claim 4,
characterised in that
the pipe connection (31) is the discharge (33) of a worm conveyor (32).

7. A device according to Claim 6,
characterised in that
the worm conveyor (32) is connected with at least one storage container (34) arranged outside the vessel (10).

8. A device according to Claim 7,
characterised in that
the material supply unit consisting of storage container (34), worm conveyor (32) and pipe connection (33) is able to be swivelled in a plane vertical to the main tapping axis (I).

9. A device according to Claim 8,
characterised in that
the material supply unit (32 to 34) is movable in the travelling direction of the pusher.

10. A device according to Claim 9,
characterised in that the material supply unit (32 to 34) has coupling elements (35) to which a drive unit for pushing the closure arrangement (20) is able to be connected with gripper elements (42).

11. A device according to Claim 4,
characterised in that
a bore (26), arranged vertically to the plate (21) in the pouring jet direction, is provided against the orifice (22) of the plate (21) which is provided for the outflow of the melt.

12. A device according to Claim 11,
characterised in that
on the side of the plate (21), facing away from the vessel (10), a protective pipe (12) is detachably secured coaxially to the axis of the bore (26) via elements (24).

13. A device according to Claim 11,
characterised in that
the orifice (23) provided parallel to the orifice (22) provided for the outflow of the melt is able to be connected via an opening (27) in the plate (21) to the pipe connection (31) which has a 90 degree deflection within the plate (21).

14. A device according to Claim 13,
characterised in that
the plate (21) has sheets (28) arranged parallel to each other and vertically to the main tapping axis (I).

## Revendications

1. Procédé pour fermer la sortie de coulée, munie d'un dispositif de fermeture, dans le fond d'un récipient métallurgique, une matière coulante mélangée à un liant étant amenée dans l'ouverture de sortie de coulée avant l'achèvement de la coulée du bain de fusion métallique à l'encontre de la direction d'écoulement du courant métallique,
caractérisé en ce que:
a) les gaz engendrés lors de la réaction du bain de fusion métallique et du mélange de matière coulante et de liant sont évacués essentiellement à travers le dispositif de fermeture et/ou le dispositif d'amenée de matière coulante, et
b) le liant est brûlé sans déchets, la matière résiduelle, sous forme coulante, bouche l'ouverture de sortie de coulée, et est empêchée de s'écouler par un dispositif de retenue mécanique jusqu'à la coulée suivante.

2. Procédé selon la revendication 1,
caractérisé en ce que la matière coulante est du sable, qui est mélangé avec un liant pouvant brûler à une température au-dessus de 200°, par exemple du glycol.

3. Procédé selon la revendication 1,
caractérisé en ce que les gaz de combustion du liant sont aspirés.

4. Sortie de coulée dans le fond d'un récipient métallurgique, comportant un dispositif pour fermer l'ouverture de sortie de coulée, dans laquelle se trouve encore une partie d'un bain de fusion métallique, comportant une plaque qui est raccordée, par l'intermédiaire d'une liaison de tube, à un dispositif d'alimentation, par lequel de la matière coulante peut être amenée dans le trou de sortie de coulée, pour mettre en oeuvre le procédé selon la revendication 1,
caractérisé en ce que la plaque présente deux embouchures (22,23), qui peuvent être amenées coaxialement à l'axe principal de sortie de coulée (I) lors du guidage de la plaque (21) parallèle au fond (11) du récipient, en ce que l'écartement (a) des deux embouchures (22,23) est plus grand que leur plus grand diamètre (D), en ce que la plaque (21) présente des éléments (25) auxquels peut être fixée la liaison de tube (31), et en ce que l'ouverture de sortie de coulée (13) est formée d'une plaque de fond creuse (54) qui présente des éléments (52,53) pour l'écoulement de fluides gazeux, auxquels est raccordé un dispositif d'aspiration (50).

5. Dispositif selon la revendication 4,
caractérisé en ce que les éléments (25) présentent une forme adaptée l'un à l'autre, qui permet une liaison mécanique de la plaque (21) à la liaison de tube (31).

6. Dispositif selon la revendication 4
caractérisé en ce que la liaison de tube (31) est la sortie (33) d'une vis sans fin (32).

7. Dispositif selon la revendication 6,
caractérisé en ce que la vis sans fin (32) est reliée à au moins un réservoir (34) agencé à l'extérieur du récipient (10).

8. Dispositif selon la revendication 7,
caractérisé en ce que l'unité d'amenée de matière, constituée du réservoir (34), de la vis sans fin (32), et du raccord de tube (33), peut pivoter dans un plan perpendiculairement à l'axe principal (I) de la sortie de coulée.

9. Dispositif selon la revendication 8,
caractérisé en ce que l'unité d'amenée de matière (32 à 34) est mobile dans la direction de déplacement du coulisseau.

10. Dispositif selon la revendication 9,
caractérisé en ce que l'unité d'amenée de matière (32 à 34) présente des éléments de couplage (35) auxquels une unité d'entraînement peut être raccordée par des éléments de prise (42) pour déplacer le dispositif de fermeture (20) .

11. Dispositif selon la revendication 4,
caractérisé en ce qu'un perçage (26) agencé perpendiculairement à la plaque (21) dans la direction du jet de coulée est prévu sur l'embouchure (22), prévue pour évacuer le bain de fusion, de la plaque (21).

12. Dispositif selon la revendication 11,
caractérisé en ce qu'un tube de protection (12) est fixé de façon amovible au côté, opposé au récipient (10), de la plaque (21) coaxialement à l'axe du perçage (26) par des éléments (24).

13. Dispositif selon la revendication 11,
caractérisé en ce que l'embouchure (23) parallèle à l'embouchure (22) prévue pour évacuer le bain de fusion peut être raccordée, par l'intermédiaire d'une ouverture (27) dans la plaque (21), à la liaison de tube (31) qui présente, à l'intérieur de la plaque (21), un renvoi de 90 degrés.

14. Dispositif selon la revendication 13,
caractérisé en ce que la plaque (21) est constituée de disques (28) agencés parallèlement les uns aux autres et perpendiculairement à l'axe principal (I) de la sortie de coulée.
